# FASCICULE DE BREVET EUROPEEN

(11) **EP 3 213 804 B1**
(45) Date de publication et mention de la délivrance du brevet: **22.04.2020**
(21) Numéro de dépôt: 17157300.9
(22) Date de dépôt: 22.02.2017
(51) Int. Cl.: B01D 35/30

(54) **DISPOSITIF DE SUPPORT POUR FILTRE A GASOIL D'UN VEHICULE AUTOMOBILE**
HALTEVORRICHTUNG FÜR DIESELFILTER EINES KRAFTFAHRZEUGS
SUPPORT DEVICE FOR DIESEL FILTER OF A MOTOR VEHICLE

(30) Priorité: 01.03.2016 FR 1651697
(43) Date de publication de la demande: 06.09.2017
(73) Titulaire: Renault s.a.s, 92100 Boulogne-Billancourt (FR)
(72) Inventeur: LEROUX, Thierry, 76000 ROUEN (FR); SUIGNARD, Yannick, 76520 LES AUTHIEUX SUR LE PSO (FR)

(56) Documents cités:
- DE-U1-202011 102 864
- FR-A1- 2 867 817
- US-A- 2 707 611
- US-A1- 2011 006 646

## Description

La présente invention concerne un dispositif de support de filtre à carburant d'un véhicule automobile, notamment un dispositif de support de filtre à gasoil d'un véhicule automobile.

On connaît du document FR 2 867 817 un dispositif de filtre à carburant de véhicule automobile. Ce dispositif comprend un moyen de filtration contenu dans un logement de filtre, ce logement étant fixé à la caisse d'un véhicule par l'intermédiaire d'un moyen de fixation. Un tel dispositif de filtre à carburant est soumis à des contraintes de résistance lors d'éventuels crashs du véhicule, durant lesquels le logement du filtre doit rester intègre lors de ces crashs pour assurer l'étanchéité du circuit du carburant. Pour répondre à ces contraintes, il est prévu que le moyen de fixation ait une résistance à la déformation inférieure à celle du logement de filtre. Ainsi, en cas de crash, le moyen de fixation se déforme avant le logement du filtre.

On connaît du document FR2919358 un dispositif de filtre à carburant de véhicule automobile comprenant une géométrie simplifiée permettant d'indexer mécaniquement un filtre à carburant en position à moindre coût.

La présente invention concerne un dispositif de support de filtre à carburant d'un véhicule automobile, notamment un dispositif de support de filtre à gasoil d'un véhicule automobile.

On connaît du document FR 2 867 817 un dispositif de filtre à carburant de véhicule automobile. Ce dispositif comprend un moyen de filtration contenu dans un logement de filtre, ce logement étant fixé à la caisse d'un véhicule par l'intermédiaire d'un moyen de fixation. Un tel dispositif de filtre à carburant est soumis à des contraintes de résistance lors d'éventuels crashs du véhicule, durant lesquels le logement du filtre doit rester intègre lors de ces crashs pour assurer l'étanchéité du circuit du carburant. Pour répondre à ces contraintes, il est prévu que le moyen de fixation ait une résistance à la déformation inférieure à celle du logement de filtre. Ainsi, en cas de crash, le moyen de fixation se déforme avant le logement du filtre.

On connaît du document FR2919358 un dispositif de filtre à carburant de véhicule automobile comprenant une géométrie simplifiée permettant d'indexer mécaniquement un filtre à carburant en position à moindre coût.

On connaît du document US2011/006646 un assemblage de montage comprenant une interface de montage qui a une protubérance, un crochet de montage à structure en plaque, connectable à l'interface de montage. L'un de l'interface de montage et du crochet de montage, a une surface ouverte pour recevoir la protubérance ou la structure en plaque de l'autre. L'un est dimensionné à une taille qui coïncide avec une dimension de l'autre protubérance ou structure en plaque.

Un objet général de l'invention est de proposer une solution de dispositif de support d'un filtre à carburant permettant d'améliorer les dispositifs connus de l'état de la technique.

En particulier, un objet de l'invention est de proposer une solution de dispositif de support d'un filtre à carburant permettant un positionnement précis d'un filtre à carburant à moindre coût tout en offrant une résistance importante en cas de crash.

Un objet complémentaire de l'invention est de proposer une solution de dispositif de support d'un filtre à carburant adaptatif et permettant un montage/démontage facile d'un filtre à carburant pour favoriser les opérations de service après-vente.

Pour atteindre ces objets, l'invention porte sur un dispositif de support d'un filtre à carburant d'un véhicule automobile, comprenant une première partie formant un logement de réception d'un filtre à carburant et comprenant des moyens de positionnement d'un filtre à carburant, caractérisé en ce qu'il comprend une seconde partie en métal comprenant un élément de liaison permettant la fixation du dispositif de support sur un véhicule automobile.

La seconde partie peut se présenter sous la forme d'une sangle comprenant un trou pour son vissage sur un véhicule automobile.

La seconde partie se présente sous la forme d'une sangle agencée dans un plan sensiblement transverse, et en zone centrale du dispositif de support par rapport à sa direction longitudinale, et comprenant un dispositif de fermeture et serrage au niveau de ses extrémités.

Le dispositif de fermeture et serrage se présente sous la forme d'une boucle coopérant avec un crochet, et comprenant un levier de serrage pour atteindre une fixation de type grenouillère.

La seconde partie peut être assemblée à la première partie par tout ou partie des éléments suivants :
- au moins une lumière coopérant avec une protubérance, permettant une liberté de mouvement relatif des deux parties dans un plan transverse ;
- au moins un passant ou simple support, agencé sur la première partie, et recevant la seconde partie, permettant son glissement dans un plan transverse et son maintien longitudinal.

La première partie peut former un logement destiné à recevoir un filtre à carburant, et peut comprendre un corps destiné à entourer partiellement la circonférence d'un filtre à carburant, notamment sur au moins la moitié de sa circonférence dans au moins un plan transverse, ce corps comprenant deux extrémités libres libérant une ouverture par laquelle un filtre à carburant peut être inséré dans le logement du dispositif de support.

La première partie peut comprendre au moins un connecteur de maintien radial et longitudinal d'un filtre à carburant.

Le connecteur peut se présenter sous une forme de patte longitudinale comprenant une surface d'accueil plane et transverse et une languette de maintien.

La première partie peut être en matériau plastique.

L'invention porte aussi sur un système de filtration comprenant un dispositif de support tel que décrit précédemment dans lequel est logé un filtre à carburant.

L'invention porte aussi sur un véhicule automobile comprenant un dispositif de support ou un système de fixation tels que décrits précédemment.

Ces objets, caractéristiques et avantages de la présente invention seront exposés en détail dans la description suivante d'un mode d'exécution particulier fait à titre non-limitatif en relation avec les figures jointes parmi lesquelles :
Les figures 1 et 2 représentent respectivement des vues en perspective avant et arrière d'un dispositif de support de filtre à carburant selon un mode de réalisation de l'invention.
La figure 3 représente une vue agrandie d'un connecteur du dispositif de support de filtre à carburant selon le mode de réalisation de l'invention.
La figure 4 est une vue en perspective d'un système de filtre à carburant dans lequel un filtre à carburant est agencé au sein du dispositif de support de filtre à carburant selon le mode de réalisation de l'invention.

Le mode de réalisation de l'invention qui va être décrit repose sur un dispositif de support d'un filtre à gasoil. Ce dispositif de support comprend une première partie de format simple et peu coûteuse, qui remplit la première fonction de positionnement du filtre à gasoil, et une seconde partie plus résistante et dans un matériau plus coûteux, remplissant la seconde fonction de résistance au crash.

Pour faciliter la description, nous définissons par convention la direction longitudinale correspondant à l'axe central du dispositif de support, correspondant aussi à l'axe longitudinal d'un filtre à gasoil lorsqu'il est positionné au sein de ce dispositif de support. Nous définissons de plus la direction transverse ou radiale toute direction perpendiculaire à cette direction longitudinale.

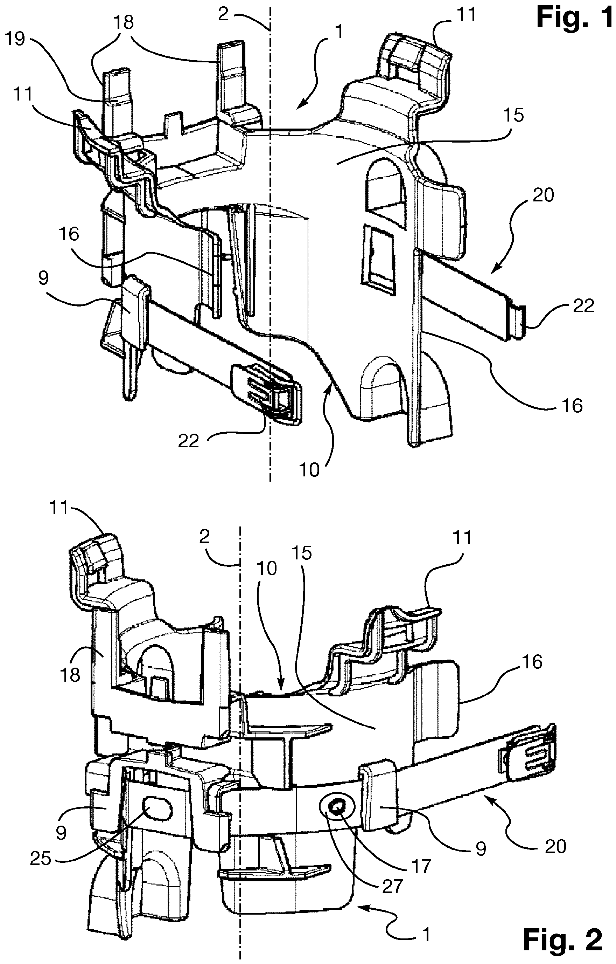

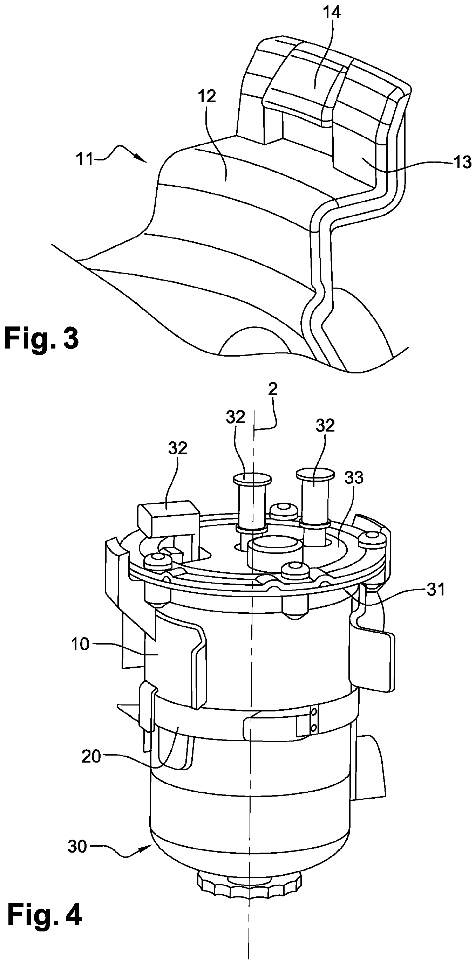

Le dispositif de support 1 pour un filtre à gasoil selon le mode de réalisation, représenté par les figures 1 et 2, comprend une première partie 10 qui forme un logement ayant globalement une forme de révolution, par exemple une forme cylindrique de révolution, autour d'un axe longitudinal 2, destiné à recevoir un filtre à gasoil se présentant globalement sous une forme sensiblement cylindrique, comme illustré par la figure 4.

Pour cela, la première partie 10 du dispositif de support 1 comprend principalement un corps 15 destiné à entourer partiellement la circonférence d'un filtre à gasoil, de préférence sur au moins la moitié de sa circonférence dans au moins un plan transverse, pour garantir un maintien suffisant. Ce corps 15 comprend ainsi une forme correspondant globalement à un cylindre tronqué, délimité par deux extrémités 16 libérant une ouverture, positionnée par convention en partie avant du dispositif, par laquelle un filtre à gasoil peut être inséré. Avantageusement, ce corps est souple et les deux extrémités 16 peuvent être écartées pour l'insertion et le retrait d'un filtre à gasoil, les deux parties latérales extrêmes du corps 15 se comportant ainsi comme deux lèvres souples déformables.

La première partie 10 du dispositif de support 1 comprend de plus des éléments permettant de garantir un bon positionnement d'un filtre à gasoil, notamment sa bonne indexation. Pour cela, elle présente deux connecteurs 11 en partie supérieure, sous la forme de pattes, qui s'étendent sensiblement dans la direction longitudinale, et qui permettent d'assurer le maintien longitudinal et radial d'un filtre à gasoil tout en assurant sa bonne orientation autour de l'axe 2. Ces deux connecteurs 11 sont diamétralement opposés par rapport à l'axe 2 du dispositif de support. La première partie 10 comprend de plus des butées longitudinales 18 complémentaires, au niveau de la partie arrière du dispositif pour assurer l'orientation autour de l'axe 2 du disque 31 incluant une forme particulière (méplat) comprenant aussi des petites marches 19 pour faciliter l'insertion longitudinale du filtre. Ces deux butées sont positionnées de manière symétrique par rapport aux deux connecteurs 11 autour de l'axe 2 du dispositif, sensiblement à 90 degrés de rotation par rapport à chacun d'entre eux.

Un connecteur 11 est plus particulièrement représenté par la figure 3. Il s'étend globalement longitudinalement, comprend une marche qui forme une surface d'accueil 12 sensiblement plane et transverse destinée à recevoir le rebord périphérique d'un disque supérieur 31 d'un filtre à gasoil 30, comme représenté sur la figure 4. Une surface longitudinale 13 s'étend depuis cette surface d'accueil 12 transverse, formant une butée de positionnement de ce disque supérieur 31, participant à son maintien radial, dans un plan transverse. De plus, cette surface longitudinale 13 se termine par une languette 14 destinée à venir recouvrir la surface supérieure du disque supérieur 31 lorsqu'il repose sur la surface d'accueil 12, garantissant son maintien longitudinal. Le disque supérieur 31 d'un filtre à gasoil comprend une forme particulière destinée spécifiquement à coopérer avec les connecteurs 11, garantissant notamment la bonne orientation du filtre à gasoil autour de l'axe 2 lors de son positionnement dans le dispositif de support.

Ainsi, lors du montage de la cartouche de filtre à gasoil dans le dispositif de support, l'opérateur insère la cartouche dans le dispositif de support jusqu'à ce que son disque supérieur 31 repose sur les surfaces d'accueil 12 des connecteurs 11 et vienne en butée contre les butées longitudinales 18 complémentaires, mentionnées ci-dessus. Le filtre à gasoil est éventuellement tourné autour de l'axe 2, jusqu'à ce que les logements prévus sur son disque supérieur 31 viennent coopérer avec les butées 18, insertion facilitée par les formes 19. Lorsque tel est le cas, le filtre à gasoil est correctement positionné dans le dispositif de support et ne peut plus tourner.

En variante, le dispositif de support peut comprendre un autre moyen d'indexation angulaire et/ou longitudinale. Avantageusement, ce moyen d'indexation s'étend sensiblement longitudinalement. Avantageusement, ce moyen d'indexation se présente sous la forme d'une ou plusieurs pattes, s'étendant depuis l'extrémité supérieure ou inférieure du dispositif de support. Dans tous les cas, la première partie 10 du dispositif de support permet le bon positionnement et maintien d'un filtre à gasoil par des moyens simples, et peut se présenter dans un matériau peu coûteux, notamment en matériau plastique, et être fabriquée de manière peu coûteuse.

Le dispositif de support 1 pour filtre à gasoil selon le mode de réalisation comprend une seconde partie 20 assemblée à la première partie 10 décrite ci-dessus. Dans ce mode de réalisation, cette seconde partie 20 se présente sous la forme d'une sangle métallique. Cette sangle est positionnée autour de la première partie 10 du dispositif, dans un plan sensiblement transverse, est assemblée avec la première partie 10 par des éléments de liaison qui assurent la position relative entre les deux parties 10, 20. Dans le mode de réalisation choisi, la seconde partie 20 conserve une liberté de mouvement relativement à la première partie 10 dans un plan transverse, mais est sensiblement fixe dans la direction longitudinale, à un niveau sensiblement central par rapport à la direction longitudinale du dispositif. Selon ce mode de réalisation, l'assemblage des deux parties 10, 20 du dispositif de support 1 est obtenu par les éléments de liaison suivants :
- Une lumière 27 de la seconde partie 20, coopérant avec une protubérance 17 de la première partie 10 agencée sur la surface extérieure du corps 15 : cet assemblage permet une liberté de mouvement de la sangle autour de la première partie 10 du dispositif de support, dont l'amplitude est définie par la longueur de la lumière 27 ; et
- Des passants 9 ou simples supports, agencés sur la surface périphérique extérieure de la première partie 10, et prévus pour recevoir la sangle, permettant le glissement de la sangle dans un plan transverse et son maintien longitudinal.

Selon le mode de réalisation de l'invention, la seconde partie 20 du dispositif de support 1 comprend un élément de liaison destiné à sa fixation sur un véhicule automobile, par exemple avec une partie de la caisse du véhicule automobile, comme un tablier. Dans le mode de réalisation choisi, cet élément de liaison est obtenu par l'intermédiaire d'une zone rigide comprenant un trou 25, de petite dimension pour ne pas fragiliser la sangle, permettant la fixation de la seconde partie 20, et plus généralement de l'ensemble du dispositif de support, par une vis sur le véhicule automobile. Cet élément de liaison est positionnée en partie centrale de la sangle, et en partie arrière du dispositif de support 1, de manière opposée aux extrémités 16 de son corps 15. Par cette architecture, l'ensemble du dispositif de support 1 est fixé au véhicule automobile par l'intermédiaire de la seconde partie 20, plus précisément par ce vissage de cette seconde partie 20 par son élément de liaison. La première partie 10 n'est pas directement fixée sur le véhicule automobile. Elle est ainsi relativement indépendante du véhicule automobile. Ainsi, les efforts dynamiques provenant du véhicule automobile, notamment en cas de crash, sont transmis directement à la seconde partie 20 du dispositif de support, qui supporte donc principalement ces efforts, en protégeant la première partie de positionnement qui est plus fragile.

Cette seconde partie 20 du dispositif de support comprend de plus sur ses extrémités un dispositif de fermeture et serrage 22 par l'intermédiaire d'une boucle/crochet et d'un levier de serrage, qui permet d'assurer une fixation manuelle facile. Cette fixation peut être du type à grenouillère. Le dispositif de fermeture et serrage 22 permet de finaliser le maintien d'un filtre à carburant en accompagnant les extrémités 16 du corps 15 autour de ce filtre, et en maintenant serré l'ensemble du dispositif autour de ce filtre, assurant ainsi son maintien.

Pour remplir les fonctions décrites ci-dessus, la seconde partie 20 du dispositif de support présente une rigidité plus importante que la première partie, pour supporter les efforts dynamiques, et se trouve en métal. Dans le mode de réalisation choisi, elle se présente sous une forme de sangle, qui conserve donc une souplesse facilitant les opérations de fermeture et serrage et d'ouverture.

La figure 4 illustre le dispositif de support en position fermée, dans lequel un filtre à gasoil 30 a été positionné. L'ensemble forme alors un système de filtre à carburant. Des orifices 32 sont prévus sur la face supérieure 33 du filtre pour être raccordés à des tuyaux de carburant conduisant le carburant depuis ou vers le système de filtre à carburant.

Sur un poste d'assemblage, un opérateur positionne le dispositif de support contre l'élément interne prévu de la caisse du véhicule en superposant le trou 25 de la sangle sur un trou pré taraudé de la carrosserie, généralement un écrou cage soudé sur la carrosserie de façon à ne pas la percer. L'opérateur fait alors passer la vis à travers le trou 25 de la sangle et la fixe dans l'écrou cage au moyen d'une visseuse.

Ensuite, pour une opération de fixation d'un filtre à carburant, un opérateur apporte le filtre à carburant 30 vers l'ouverture avant du dispositif de support 1, dont l'ouverture peut être agrandie du fait de la souplesse des deux parties 10, 20 qui permet d'évaser les deux lèvres formées par les extrémités 16 du corps 15, pour laisser passer le filtre à carburant 30 dans le logement central, jusqu'à venir en butée, notamment en le plaquant contre la paroi arrière et en le positionnant au bon niveau dans la direction longitudinale. L'opérateur referme ensuite la sangle au moyen de la fermeture rapide à boucle-crochet mentionnée ci-dessus.

Le dispositif de support précédemment décrit permet d'immobiliser un filtre à carburant quelconque, par exemple ne présentant pas de moyen d'indexation mécanique et est ainsi universel. En effet, une cartouche de filtre à carburant quelconque peut être mise en place dans le dispositif. Selon une réalisation possible, il peut aussi être prévu sur la cartouche et sur le dispositif de support des repères pour permettre de réaliser une indexation visuelle de la position de la cartouche dans le dispositif de support. Ainsi, le dispositif de support selon l'invention peut par exemple être utilisé sur différents types de véhicules avec différents types de filtres à carburant.

## Revendications

1. Dispositif de support (1) d'un filtre à carburant d'un véhicule automobile, comprenant une première partie (10) formant un logement de réception d'un filtre à carburant et comprenant des moyens de positionnement d'un filtre à carburant, **caractérisé en ce qu'**il comprend une seconde partie (20) en métal se présentant sous la forme d'une sangle agencée dans un plan transverse, par rapport à la direction longitudinale correspondant à un axe centrale (2) du dispositif de support, et en zone centrale du dispositif de support (1) par rapport à sa direction longitudinale, comprenant un dispositif de fermeture et serrage (22) au niveau de ses extrémités se présentant sous la forme d'une boucle coopérant avec un crochet, et comprenant un levier de serrage pour atteindre une fixation de type grenouillère, et comprenant un élément de liaison permettant la fixation du dispositif de support (1) sur un véhicule automobile.

2. Dispositif de support selon la revendication précédente, **caractérisé en ce que** ledit élément de liaison comprend un trou (25) pour son vissage sur le véhicule automobile.

3. Dispositif de support selon l'une des revendications précédentes, **caractérisé en ce que** la seconde partie (20) est assemblée à la première partie (10) par tout ou partie des éléments suivants :
- au moins une lumière (27) coopérant avec une protubérance (17), permettant une liberté de mouvement relatif des deux parties (10, 20) dans un plan transverse ;
- au moins un passant (9) ou simple support, agencé sur la première partie (10), et recevant la seconde partie (20), permettant son glissement dans un plan transverse et son maintien longitudinal.

4. Dispositif de support selon l'une des revendications précédentes, **caractérisé en ce que** la première partie (10) forme un logement destiné à recevoir le filtre à carburant, comprend un corps (15) destiné à entourer partiellement la circonférence du filtre à carburant, notamment sur au moins la moitié de sa circonférence dans au moins un plan transverse, ce corps (15) comprenant deux extrémités (16) libres libérant une ouverture par laquelle le filtre à carburant peut être inséré dans le logement du dispositif de support.

5. Dispositif de support selon l'une des revendications précédentes, **caractérisé en ce que** la première partie (10) comprend au moins un connecteur (11) de maintien radial et longitudinal de filtre à carburant.

6. Dispositif de support selon la revendication précédente, **caractérisé en ce que** le connecteur (11) se présente sous une forme de patte longitudinale comprenant une surface d'accueil (12) plane et transverse et une languette (14) de maintien.

7. Dispositif de support selon l'une des revendications précédentes, **caractérisé en ce que** la première partie (10) est en matériau plastique.

8. Système de filtration comprenant un dispositif de support (1) selon l'une des revendications précédentes dans lequel est logé un filtre à carburant (30).

9. Véhicule automobile comprenant un dispositif de support (1) selon l'une des revendications 1 à 7 ou un système de filtration selon la revendication 8.

## Patentansprüche

1. Haltevorrichtung (1) eines Kraftstofffilters eines Kraftfahrzeugs, welche einen ersten Teil (10) umfasst, der einen Sitz zur Aufnahme eines Kraftstofffilters bildet und Mittel zur Positionierung eines Kraftstofffilters umfasst, **dadurch gekennzeichnet, dass** sie einen zweiten Teil (20) aus Metall umfasst, der die Form eines Gurtes aufweist, der in einer quer verlaufenden Ebene, bezogen auf die einer Mittelachse (2) der Haltevorrichtung entsprechende Längsrichtung, und in einem mittleren Bereich der Haltevorrichtung (1), bezogen auf deren Längsrichtung, angeordnet ist und an seinen Enden eine Schließ- und Spannvorrichtung (22) umfasst, welche die Form eines Bügels aufweist, der mit einem Haken zusammenwirkt, und einen Spannhebel umfasst, um eine Befestigung vom Typ eines Schnallenverschlusses zu erreichen, und der ein Verbindungselement umfasst, das die Befestigung der Haltevorrichtung (1) an einem Kraftfahrzeug ermöglicht.

2. Haltevorrichtung nach dem vorhergehenden Anspruch, **dadurch gekennzeichnet, dass** das Verbindungselement ein Loch (25) für seine Verschraubung am Kraftfahrzeug umfasst.

3. Haltevorrichtung nach einem der vorhergehenden Ansprüche, **dadurch gekennzeichnet, dass** der zweite Teil (20) durch alle oder einige der folgenden Elemente mit dem ersten Teil (10) verbunden ist:
- wenigstens eine Öffnung (27) die mit einem Vorsprung (17) zusammenwirkt, was eine Freiheit der relativen Bewegung der beiden Teile (10, 20) in einer quer verlaufenden Ebene ermöglicht;
- wenigstens eine Schlaufe (9) oder einen einfachen Halter, der am ersten Teil (10) angeordnet ist und den zweiten Teil (20) aufnimmt, wobei er dessen Gleiten in einer quer verlaufenden Ebene und dessen Halten in Längsrichtung ermöglicht.

4. Haltevorrichtung nach einem der vorhergehenden Ansprüche, **dadurch gekennzeichnet, dass** der erste Teil (10) einen Sitz bildet, der dazu bestimmt ist, das Kraftstofffilter aufzunehmen, einen Körper (15) umfasst, der dazu bestimmt ist, den Umfang des Kraftstofffilters teilweise zu umgeben, insbesondere auf wenigstens der Hälfte seines Umfangs in wenigstens einer quer verlaufenden Ebene, wobei dieser Körper (15) zwei freie Enden (16) umfasst, die eine Öffnung frei lassen, durch welche das Kraftstofffilter in den Sitz der Haltevorrichtung eingesetzt werden kann.

5. Haltevorrichtung nach einem der vorhergehenden Ansprüche, **dadurch gekennzeichnet, dass** der erste Teil (10) wenigstens einen Verbinder (11) zum radialen Halten und Halten in Längsrichtung des Kraftstofffilters umfasst.

6. Haltevorrichtung nach dem vorhergehenden Anspruch, **dadurch gekennzeichnet, dass** der Verbinder (11) die Form eines Längslappens aufweist, der eine ebene und quer verlaufende Aufnahmefläche (12) und eine Haltezunge (14) umfasst.

7. Haltevorrichtung nach einem der vorhergehenden Ansprüche, **dadurch gekennzeichnet, dass** der erste Teil (10) aus Kunststoff besteht.

8. Filtersystem, welches eine Haltevorrichtung (1) nach einem der vorhergehenden Ansprüche umfasst, in welcher ein Kraftstofffilter (30) aufgenommen ist.

9. Kraftfahrzeug, welches eine Haltevorrichtung (1) nach einem der Ansprüche 1 bis 7 oder ein Filtersystem nach Anspruch 8 umfasst.

## Claims

1. Support device (1) for a fuel filter of a motor vehicle, comprising a first part (10) that forms a recess for receiving a fuel filter and comprising means for positioning a fuel filter, **characterized in that** it comprises a second part (20) made of metal that takes the form of a strap arranged in a transverse plane, with respect to the longitudinal direction corresponding to a central axis (2) of the support device, and in the central region of the support device (1) with respect to its longitudinal direction, comprising a closure and tightening device (22) at its ends, in the form of a buckle that engages with a hook, and comprising a tightening lever to achieve a latch-type binding, and comprising a connection element that allows the support device (1) to be attached to a motor vehicle.

2. Support device according to the preceding claim, **characterized in that** said connection element comprises a hole (25) so that it can be screwed onto the motor vehicle.

3. Support device according to either of the preceding claims, **characterized in that** the second part (20) is joined to the first part (10) by all or some of the following elements:
- at least one opening (27) that cooperates with a protuberance (17), permitting freedom of relative movement of the two parts (10, 20) in a transverse plane;
- at least one loop (9) or simple support, arranged on the first part (10), and receiving the second part (20), allowing it to slide in a transverse plane and allowing it to be held in the longitudinal direction.

4. Support device according to one of the preceding claims, **characterized in that** the first part (10) forms a recess that is intended to receive the fuel filter, and comprises a body (15) that is intended to partially surround the circumference of the fuel filter, in particular over at least half of its circumference in at least one transverse plane, this body (15) comprising two free ends (16) freeing up an opening by which the fuel filter can be inserted into the recess of the support device.

5. Support device according to one of the preceding claims, **characterized in that** the first part (10) comprises at least one connector (11) for holding a fuel filter radially and longitudinally.

6. Support device according to the preceding claim, **characterized in that** the connector (11) is in the form of a longitudinal tab comprising a planar, transverse receiving surface (12) and a holding tongue (14).

7. Support device according to one of the preceding claims, **characterized in that** the first part (10) is made of plastic material.

8. Filtration system comprising a support device (1) according to one of the preceding claims, in which a fuel filter (30) is accommodated.

9. Motor vehicle comprising a support device (1) according to one of Claims 1 to 7, or a filtration system according to Claim 8.
